(19) Europäisches Patentamt
European Patent Office
Office européen des brevets

(11) **EP 3 317 315 B1**

(12) **EUROPEAN PATENT SPECIFICATION**

(45) Date of publication and mention
of the grant of the patent:
**17.06.2020 Bulletin 2020/25**

(21) Application number: **16733556.1**

(22) Date of filing: **30.06.2016**

(51) Int Cl.:
**C08G 18/48** (2006.01)    **C08G 18/76** (2006.01)

(86) International application number:
**PCT/EP2016/065264**

(87) International publication number:
**WO 2017/001543 (05.01.2017 Gazette 2017/01)**

(54) **IMPROVEMENTS RELATING TO POLYURETHANES**

VERBESSERUNGEN IM ZUSAMMENHANG MIT POLYURETHANEN

AMÉLIORATIONS CONCERNANT LES POLYURÉTHANES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.07.2015 IN 3396CH2015**

(43) Date of publication of application:
**09.05.2018 Bulletin 2018/19**

(73) Proprietor: **Shell Internationale Research
Maatschappij B.V.
2596 HR The Hague (NL)**

(72) Inventors:
• **NACHIAPPAN, Eswaramurthi
  Bangalore 56099 (IN)**
• **ELEVELD, Michiel, Barend
  1031CM Amsterdam (NL)**

(74) Representative: **Shell Legal Services IP
p/a Carel van Bylandtlaan 16
2596 HR Den Haag (NL)**

(56) References cited:
**US-A1- 2005 090 572**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the Invention

This disclosure relates to flexible polyurethane foams. In particular, though not exclusively, this disclosure relates to methods of making polyurethane foams, foams obtainable thereby, and to the use of polyether polyols in the preparation of flexible polyurethane foams.

Background to the Invention

Flexible polyurethane (PU) foams have found extensive use in a multitude of industrial and consumer applications. This popularity is due to their wide-ranging mechanical properties and ability to be easily manufactured. Main sectors of application are the automotive and aircraft industries, upholstered furniture and technical articles. For instance, full foam seats, top pads for the seats and restraints for back and head, all made from flexible polyurethane foam, are widely used in cars and airplanes. Other applications include the use of flexible polyurethane foam as carpet backings, bedding and mattresses, foamed seat saddles for motorbikes, gaskets between a car body and its lights, lip seals of air filters for engines and insulating layers on car parts and engine parts to reduce sound and vibration. Flexible polyurethane foams can have various physical properties depending on the desired use.

As is well known to those skilled in the art, polyurethanes are formed from the reaction of isocyanate (-N=C=O) groups with hydroxyl (-OH) groups. The most common method of polyurethane production is via the reaction of polyether polyol and isocyanate. Cross linking agents, blowing agents, catalysts and other additives may also be included in the polyurethane formulation as needed.

Polyether polyols used in the production of flexible polyurethanes are typically derived from alkylene oxides (such as, for example, propylene oxide (PO) and/or ethylene oxide (EO)) and various starters such as ethylene glycol, propylene glycol, glycerine, sucrose and/or sorbitol. Known processes for the production of polyether polyols include ring-opening polymerization of alkylene oxide in the presence of an alkali metal catalyst, and ring-opening polymerization of alkylene oxide in the presence of a composite metal cyanide complex catalyst.

For some applications, the compression set properties of flexible polyurethane foams are of particular importance. The compression set of a material is the permanent deformation remaining when a force (that was applied to it) is removed.

Compression set may be measured under wet or dry conditions. The measurement of wet and dry compression set properties in foams is described in detail hereinbelow. In such measurements a compression set value of 0 means that the foam is no longer compressed after the compression set test (i.e., the foam has fully relaxed back to its pre-compression height). Increasing compression set values relate to foams that remain increasingly compressed after completion of the compression test.

It may in particular be desirable to have flexible polyurethane foams that exhibit advantageously low wet and/or dry compression set. Examples of applications in which a low compression set is of particular importance include seating, in particular automotive, and bedding. Low compression set is also desirable for transportation of foam blocks where foam blocks are compressed and transported to a destination and then decompressed before further processing or sale.

Various approaches for producing flexible polyurethane foams that exhibit advantageously low wet and/or dry compression set are known in the art. The most common approach is adding additives into foam formulation. Alternatively foam manufacturers employ various methods (cell opening agents, polymer polyol and mechanical crushing of foams) to get foam blocks with higher air permeability, which helps to some extent to improve compression set.

It is an object of the invention to provide flexible polyurethane foams exhibiting advantageously low wet and/or dry compression set, and/or to provide such foams efficiently and/or at low cost.

Statements of the Invention

It has now been found that the presence of certain aldehydic species in polyether polyols can lead to advantageous compression set properties when making flexible polyurethane (PU) foams from said polyether polyols.

The present description discloses a process for making a flexible polyurethane foam, the process comprising reacting a polyether polyol with foam-forming reactants to provide said polyurethane foam, wherein said polyether polyol comprises a latent aldehyde content of at least 50 parts per million weight (ppm), and/or said polyether polyol is obtainable from ring-opening polymerization of alkylene oxide comprising a free aldehyde content of at least 200 parts per million weight

(ppm). Further, the present description discloses a polyurethane foam obtainable by said process. Still further, the present description discloses a shaped article comprising such a polyurethane foam.

The present invention provides the use of a polyether polyol comprising a latent aldehyde content of at least 50 ppm, and/or obtainable from ring opening polymerization of alkylene oxide comprising a free aldehyde content of at least 200 ppm, in the preparation of a flexible polyurethane foam for the purpose of affecting, in particular reducing, a compression set of the resulting foam. The compression set may suitably be a wet compression set or a dry compression set. The use may be, for example, in accordance with any foam preparation process defined or described herein.

The overall aldehyde content of a polyether polyol is understood herein to consist of free aldehyde content, and/or latent aldehyde content available to be freed from bound moieties of the polyether polyol. An aldehyde is a compound containing an aldehyde functional group (-CHO).

Latent aldehyde content is aldehyde content available to be released from aldehyde precursor moieties incorporated in the polyether polyol polymer structure. For example, latent aldehyde content may be incorporated by the reaction of a polyether polyol with free aldehyde, or a masked version thereof (such as a geminal diol e.g. -C(OH)$_2$-), or derivative thereof such as a hemiacetal e.g. -COR(OR')-). Alcohol groups of a polyether polyol may react with aldehyde functional groups (or masked versions thereof) to form labile chemical bonds. Such labile chemical bonds may include ether and/or ester bonds. However, it is possible that latent aldehyde content may be available from precursor moieties incorporated into a polyether polyol structure by other means.

All aldehyde contents are measured by weight of aldehyde, based on the total weight of the polyether polyol.

Contrary to prior art prejudices, it has been found that polyether polyols comprising a latent aldehyde content of at least 50 ppm and/or obtainable from ring opening polymerization of alkylene oxide comprising a free aldehyde content of at least 200 ppm, offer particular advantages in the context of polyurethane foams.

Specifically, polyurethane foams made from such polyether polyols have been found to exhibit advantageously low wet and/or dry compression set properties.

The aldehyde content is only required in small amounts. In the prior art, action is generally taken to decrease aldehyde content in polyether polyol or alkylene oxide precursor, as it is seen as detrimental. It has now been found that aldehyde content can surprisingly be of advantage. The overall process of making polyurethane foams, and the base materials for such processes, can therefore be simplified and made more effective. For example, one or more aldehyde stripping or purification steps may be omitted during polyether polyol production, and/or during alkylene oxide production.

The latent aldehyde content of the polyether polyol may be determined by capillary gas chromatography with flame ionisation detection, e.g. as described in the "Measurement Techniques" hereinbelow, after freeing the aldehyde from bound moieties of the polyether polyol under acidic conditions (e.g. a pH below 3), in particular with strong acid, more in particular phosphoric acid, e.g. as described in the "Measurement Techniques" section hereinbelow. To determine the latent aldehyde content it may be necessary to subtract free aldehyde content from a sum of the free aldehyde content and the latent aldehyde content determined after freeing aldehyde from bound moieties of the polyether polyol. Alternatively, free aldehyde content may be stripped from the polyol before latent aldehyde content is determined.

The latent aldehyde content of the polyether polyol may be taken to comprise or consist of one or more aldehydes available from bound moieties in the polyether polyol (i.e. aldehydes freed under said acidic conditions). The latent aldehyde content does not necessarily represent the total latent aldehyde content of the polyether polyol. However, in some embodiments of the invention, the latent aldehyde content consists of all aldehydes available from bound moieties in the polyether polyol, i.e. the latent aldehyde content is the total latent aldehyde content of the polyether polyol.

The latent aldehyde content may, for example, be taken to comprise or consist of linear, branched or cyclic aldehydes freed from the polyether polyol under said acidic conditions. Suitably, the latent aldehyde content may comprise or consist of one or more aldehydes containing from 2 to 12 carbon atoms, preferably 2 to 6 carbon atoms, and most preferably 2 or 3 carbon atoms. The latent aldehyde content may optionally comprise an aldehyde with a plurality of aldehyde functional groups. In an embodiment, the latent aldehyde content comprises or consists of propionaldehyde (PA) and acetaldehyde (AA) freed from the polyether polyol under said acidic conditions. In an embodiment, the latent aldehyde content comprises or consists of PA freed from the polyether polyol under said acidic conditions. In an embodiment, the aldehyde content comprises or consists of AA freed from the polyether polyol under said acidic conditions.

The latent aldehyde content, optionally the total latent aldehyde content, is at least 50 ppm based on the total weight of the polyether polyol. Suitably, the latent aldehyde content, optionally the total latent aldehyde content, may be at least 75 ppm, in particular at least 100 ppm, or at least 150 ppm based on the total weight of the polyether polyol.

In an embodiment, the latent aldehyde content, optionally the total latent aldehyde content, is at most 200 ppm, at most 300 ppm, at most 500 ppm, at most 1000 ppm, at most 2000 ppm, or at most 5000 ppm based on the total weight of the polyether polyol.

In an embodiment, the latent aldehyde content, optionally the total latent aldehyde content, is in the range of from 50 to 500 ppm, in the range of from 100 to 300 ppm, or in the range of from 150 to 250 ppm.

In an embodiment, the latent aldehyde content, optionally the total latent aldehyde content, comprises or consists of 50 to 500 ppm PA, in particular 100 to 300 ppm PA.

In an embodiment, the latent aldehyde content, optionally the total aldehyde content, comprises or consists of 1 to 200 ppm AA, in particular 5 to 50 ppm AA.

The polyether polyol may optionally comprise a free aldehyde content. The free aldehyde content of the polyether polyol may be taken to comprise or consist of one or more aldehydes in the polyether polyol. Such aldehydes may suitably be as detailed above in respect of latent aldehyde content. The free aldehyde content does not necessarily represent the total free aldehyde content of the polyether polyol. However, in some embodiments of the invention, the free aldehyde content consists of all free aldehydes in the polyether polyol, i.e. the free aldehyde content is the total free aldehyde content of the polyether polyol.

Free aldehyde content of the polyether polyol may be determined by capillary gas chromatography with flame ionisation detection, e.g. as described in the "Measurement Techniques" section hereinbelow but without the acid treatment.

In an embodiment the free aldehyde content of the polyol, optionally the total free aldehyde content of the polyol, is at most 100 ppm, in particular at most 75 ppm, preferably at most 50 ppm, such as at most 10 ppm. In some embodiments, the free aldehyde content of the polyol, optionally the total free aldehyde content of the polyol, is at least 0.1 ppm, such as at least 0.2 ppm, in particular at least 1 ppm.

The polyurethane foam to be prepared in the present process is a flexible polyurethane foam, suitably prepared by a slabstock process. Polyether polyols suitable for preparing flexible polyurethane foams tend to have a relatively high number average molecular weight (e.g. in the range of from 2500 to 10000 Dalton, preferably 2700 to 4000 Dalton, most preferably 2800 to 3500 Dalton) and a relatively low nominal functionality ($F_n$) (e.g. in the range of from 2 to 4, preferably in the range of from 2 to 3.5, most preferably in the range of from 2.5 to 3).

The hydroxyl value (OH-value, ASTM D 4274D) of the PO and/or EO based polyether polyol may suitably be in the range of from 15 to 150 mg KOH/g, more suitably in the range of from 20 to 75 mg KOH/g, in particular in the range of from 32 to 64 mg KOH/g.

In an embodiment, the polyether polyol is obtainable by a process comprising ring-opening polymerization of alkylene oxide in the presence of a catalyst. Suitably, the polyether polyol may be prepared by a process comprising reacting an initiator (starter) having a plurality of active hydrogen atoms with PO and/or EO, in the presence of a catalyst, to carry out the polymerization of the alkylene oxide.

Alkylene oxide is usually produced in a process comprising (a) reacting alkenes with suitable oxidant to yield a reaction mixture containing alkylene oxide, (b) separating wet crude alkylene oxide from the reaction mixture obtained in step (a), and optionally (c) removing water from the wet crude alkylene oxide by at least one distillation treatment to obtain dry crude alkylene oxide.

Step (b) generally consists of (bl) removing unreacted alkene from the reaction mixture, and (b2) separating the wet crude alkylene oxide from the mixture obtained in step (bl) by at least one distillation treatment.

The thus obtained wet or dry crude alkylene oxide, further referred to herein as crude alkylene oxide, still contains minor quantities of by-products having a boiling point close to the alkylene oxides and/or forming azeotropic mixtures with the alkylene oxide. Such impurities include aldehydes, such as low boiling point aldehydes PA and/or AA.

Even the presence in very minor amounts in the range of from 50 to 100 ppmw of impurities stemming from the manufacture of alkylene oxide derivatives is considered undesirable for the manufacture of polyether polyols, as stated in DE-A-101,43,195. Moreover, if crude alkylene oxide is employed in the conventional base-catalysed polyol manufacture, the obtained polyether polyols generally exhibit a low nominal functionality and a high content in unsaturated structures. This is understood to make them unsuitable for use in the manufacture of polyurethane foams.

Generally, only substantially purified alkylene oxide (further referred to herein as pure alkylene oxide) having an alkylene oxide content of more than 99. 99% by weight is generally considered as satisfactory for the manufacture of alkylene oxide derivatives. However, in distillation units useful for step (b) and optional step (c) of the above process, the contaminants cannot be removed from the alkylene oxide to the desired level due to insufficient separation capacity or due to unacceptable loss of alkylene oxide.

Therefore, pure alkylene oxide is generally prepared from crude alkylene oxide by submitting the crude alkylene oxide obtained from step (b) or (c) to an additional purification treatment (d).

The additional purification (d) usually comprises multiple process steps, as the removal of impurities stemming from step (a) is particularly difficult. This additional purification requires complex equipment, and consumes large amounts of energy as well as involving the undesired handling of alkylene oxide, as outlined in EP-A-0,755, 716, US-A-3,578,568, and WO 02/070497. The purification treatment can also generate poly (alkylene oxide) of high molecular weight in the purified alkylene oxide, which is known to lead to application problems with polyether polyols prepared from the obtained alkylene oxides, as described in US-A-4,692,535 and WO-A-02/070497. Therefore, pure alkylene oxide for the preparation of polyether polyols is generally treated to remove not only the impurities originating from its manufacture, but also to remove impurities that are generated during the purification treatment itself.

In an embodiment, the polyether polyol useful in the present invention is obtainable from ring opening polymerization of alkylene oxide comprising a free aldehyde content of at least 200 ppm.

It is unexpected that a useful, and indeed advantageous, polyurethane foam can be prepared from such a polyether polyol, which may, for example, be a polyether polyol derived from wet or crude alkylene oxide, e.g. as described above.

The free aldehyde content in the alkylene oxide is based on the total weight of the alkylene oxide used to make the polyether polyol and may be determined by headspace capillary gas chromatography with flame ionisation detection ("headspace GC"). Suitable conditions for such a process are set out, for example in Table 1 herein below. Calibration may be performed using samples with known aldehyde concentrations.

The free aldehyde content of the alkylene oxide may comprise or consist of one or more aldehydes free in the alkylene oxide. The free aldehyde content does not necessarily represent the total aldehyde content of the alkylene oxide. However, in some embodiments of the invention, the free aldehyde content consists of all aldehydes free in the polyether polyol, i.e. the free aldehyde content is the total free aldehyde content of the alkylene oxide.

In an embodiment, the free aldehyde content, optionally the total free aldehyde content, of the alkylene oxide is present in an amount of at least 300 ppm, suitably at least 400 ppm or even at least 500 ppm.

In an embodiment, the free aldehyde content, optionally the total free aldehyde content, of the alkylene oxide is present in an amount of at most 750 ppm, at most at most 2000 ppm, at most 5000 ppm, at most 7000 ppm, or at most 10000 ppm.

In an embodiment, the free aldehyde content, optionally the total free aldehyde content, is present in the alkylene oxide in an amount in the range of from 800 to 6000 ppm.

In an embodiment, the free aldehyde content, optionally the total free aldehyde content, of the alkylene oxide comprises or consists of PA in an amount in the range of from 500 to 3000 ppm, and/or AA in an amount in the range of from 200 to 3000 ppm.

In an embodiment, the free aldehyde content, optionally the total free aldehyde content, of the alkylene oxide comprises or consists of PA in an amount in the range of from 300 to 1000 ppm, and/or AA in an amount in the range of from 5 to 100 ppm.

In an embodiment, polyether polyol is obtainable from crude alkylene oxide, and in particular from crude PO and/or EO.

The alkylene oxide may be "wet" or "dry". In one embodiment, the alkylene oxide comprises water in an amount in the range of from 500 to 5000 ppm, such as in the range of 750 to 3000 ppm. In another embodiment, the alkylene oxide comprises water, if any, in an amount in the range of from 1 to 200 ppm, such as in the range of from 10 to 100 ppm.

Where PO and EO moieties are present in the polyether polyol they may preferably be randomly copolymerised.

Ring-opening polymerisation to provide the polyether polyol may be performed in the presence of a composite metal cyanide complex catalyst and/or in the presence of an alkali metal catalyst.

Composite metal cyanide complex catalysts for producing PO based polyether polyol are well known in the art. Composite metal cyanide complex catalysts are frequently also referred to as double metal cyanide (DMC) catalysts. A composite metal cyanide complex catalyst is typically represented by the following formula (1):

$$(1) \qquad M^1_a[M^2_b(CN)_c]_d.e(M^1_fX_g).h(H_2O).i(R)$$

wherein each of $M^1$ and $M^2$ is a metal, X is a halogen atom, R is an organic ligand, and each of a, b, c, d, e, f, g, h and i is a number which is variable depending upon the atomic balances of the metals, the number of organic ligands to be coordinated, etc.

In the above formula (1), $M^1$ is preferably a metal selected from Zn(II) or Fe(II). In the above formula, $M^2$ is preferably a metal selected from Co(III) or Fe(III). However, other metals and oxidation states may also be used, as is known in the art.

In the above formula (1), R is an organic ligand and is preferably at least one compound selected from the group consisting of an alcohol, an ether, a ketone, an ester, an amine and an amide. As such an organic ligand, a water-soluble one may be used. Specifically, one or more compounds selected from tert-butyl alcohol, n-butyl alcohol, iso-butyl alcohol, tert-pentyl alcohol, isopentyl alcohol, N, N-dimethyl acetamide, glyme (ethylene glycol dimethyl ether), diglyme (diethylene glycol dimethyl ether), triglyme (triethylene glycol dimethyl ether), ethylene glycol mono-tert-butylether, iso-propyl alcohol and dioxane, may be used as organic ligand(s). The dioxane may be 1,4-dioxane or 1,3-dioxane and is preferably 1,4-dioxane. Most preferably, the organic ligand or one of the organic ligands in the composite metal cyanide complex catalyst is tert-butyl alcohol. Further, as an alcohol organic ligand, a polyol, preferably a polyether polyol may be used. More preferably, a poly (propylene glycol) having a number average molecular weight in the range of from 500 to 2,500 Dalton, preferably 800 to 2,200 Dalton, may be used as the organic ligand or one of the organic ligands. Most preferably, such poly(propylene glycol) is used in combination with tert-butyl alcohol as organic ligands. The composite metal cyanide complex catalyst can be produced by known production methods.

The reaction product obtained by such methods may be washed and then subjected to filtration, and the cake (solid component) thereby obtained may be dried to prepare a composite metal cyanide complex catalyst in a powder form. Alternatively, the aqueous solution containing organic ligand and the composite metal cyanide complex catalyst after washing the reaction product, may be dispersed in a polyether polyol, and then, an excess amount of water and the organic ligand may be distilled off to prepare a composite metal cyanide complex catalyst in a slurry form. As such dispersing polyol, a polyether polyol may be used. The polyether polyol is preferably a polyether polyol having of from 2 to 12 hydroxyl groups and a number average molecular weight of from 300 to 5,000 Dalton which is obtainable by ring-opening polymerization of an alkylene oxide with a polyhydric alcohol such as ethylene glycol, propylene glycol, diethylene glycol, dipropylene glycol, trimethylol propane or glycerol in the presence of an alkali catalyst or a cationic catalyst. Such a polyether polyol may also be used as an initiator at the time of subsequently producing a polyether polyol using the composite metal cyanide complex catalyst in slurry form.

The number of hydroxyl groups in such dispersing polyol is preferably of from 2 to 8, particularly preferably 2 to 3. The alkylene oxide to be used in making said dispersing polyol may be propylene oxide, 1,2-butylene oxide, 2,3-butylene oxide, epichlorohydrin, oxetane or tetrahydrofuran. They may be used in combination as a mixture of two or more of them. Propylene oxide and/or ethylene oxide is preferred. Most preferably, said dispersing polyol is a poly (propylene glycol) having a number average molecular weight of from 500 to 1,500 Dalton.

In an embodiment, the initiator is diol, triol, polyether polyol or mixtures thereof. As the initiator, a polyhydric alcohol of from 2 to 12 hydroxyl groups such as ethylene glycol, propylene glycol, diethylene glycol, dipropylene glycol, trimethylol propane or glycerol, or a polyether monool or polyether polyol (intermediate starters) may be used. Suitably, a polyether monool or intermediate starters having of from 2 to 12 hydroxyl groups and a number average molecular weight of from 300 to 1,000 Dalton, obtainable by ring- opening polymerization of an alkylene oxide with the above-mentioned polyhydric alcohol in the presence of an alkali catalyst or a cationic catalyst, may be used. The number of hydroxyl groups in the above-mentioned polyhydric alcohol is preferably of from 2 to 8, particularly preferably 2 or 3. Most preferably, propylene glycol (MPG), glycerol or a combination of both is used as initiator.

The initiator may be introduced continuously to a reactor together with the alkylene oxide and/or the catalyst, to carry out the polymerization of the alkylene oxide. As the initiator in such a case, a polyhydric alcohol having a low molecular weight may be used. As such a polyhydric alcohol having a low molecular weight, a polyhydric alcohol having a molecular weight of at most 400, such as ethylene glycol, propylene glycol, diethylene glycol, dipropylene glycol, trimethylol propane or glycerol, may be used. Most preferably, also in such case, propylene glycol (MPG), ethylene glycol (MEG), diethylene glycol (DEG), glycerol or a combination thereof is used as initiator.

Alternatively, batch methods may be used to prepare the PO and/or EO based polyether polyol. Such batch methods may be performed in the presence of a composite metal cyanide catalyst or in the presence of an alkali-metal catalyst, e.g. KOH, as is known in the art.

Composite metal cyanide catalysed polymerization in general tends to produce few low molecular weight compounds (particularly low molecular weight monools) than alkali-metal catalysed polymerisation.

The said polyether polyol may advantageously be the sole polyether polyol used to make the polyurethane foam. Thus the foam may be made from a reactant mixture consisting of the polyether polyol and the foam-forming reactants. However, the polyether polyol may also be used in combination with one or more other polyether polyols, as is known in the art. To offer significant benefits in the wet and/or dry compression sets, the said polyether polyol may preferably make up at least 50% w/w of an overall amount of polyether polyol used to make the polyurethane foam, preferably at least 70% w/w, more preferably at least 95% w/w.

As is known in the art, the foam-forming reactants will typically comprise a polyisocyanate in the presence of a blowing agent.

The polyisocyanate may for example be an aromatic polyisocyanate such as tolylene diisocyanate (TDI), diphenylmethane diisocyanate or polymethylene polyphenyl isocyanate, an aliphatic polyisocyanate such as hexamethylene diisocyanate, xylene diisocyanate, dicyclohexylmethane diisocyanate, lysine diisocyanate or tetramethylxylylene diisocyanate, an alicyclic polyisocyanate such as isophorone diisocyanate, or a modified product thereof. For example, the polyisocyanate is a mixture of 80 % w/w of 2,4-tolylene diisocyanate and 20 % w/w of 2,6-tolylene diisocyanate, which mixture is sold as "TDI-80".

In the polyurethane preparation process of the present invention, the molar ratio of isocyanate (NCO) groups in the polyisocyanate to hydroxyl (OH) groups in the polyether polyol and any water may be such that the final polyurethane foam contains no free terminal NCO groups.

Said molar ratio of NCO/OH is preferably of from 0.7/1 to 1.5/1. A molar ratio of NCO/OH of 1/1 corresponds with an isocyanate index of 100.

The type of blowing agent used to prepare the polyurethane foam of the present invention, is not critical. For example, suitable blowing agents include water, acetone, gaseous or liquid carbon dioxide, halogenated hydrocarbons such as methylene chloride, aliphatic alkanes and alicyclic alkanes. Due to the ozone depleting effect of fully chlorinated, fluorinated alkanes (CFC's) the use of this type of blowing agent is generally not preferred, although it is possible to use them. Halogenated alkanes, wherein at least one hydrogen atom has not been substituted by a halogen atom (the so-called HCFC's) have no or hardly any ozone depleting effect and therefore are the preferred halogenated hydrocarbons to be used in physically blown foams. A very suitable HCFC type blowing agent is 1- chloro-1,1-difluoroethane. The use of water as a (chemical) blowing agent and methylene chloride are also well known. Water reacts with isocyanate groups according to the well-known $NCO/H_2O$ reaction, thereby releasing carbon dioxide which causes the blowing to occur.

Aliphatic and alicyclic alkanes, finally, were developed as alternative blowing agents for the CFC's. Examples of such alkanes are n-pentane and n-hexane (aliphatic) and cyclopentane and cyclohexane (alicyclic). It will be understood that the above blowing agents may be used singly or in mixtures of two or more. The amounts wherein the blowing agents are to be used are those conventionally applied, i.e.: between 0.1 and 10 per hundred parts by weight of polyether polyol (php), preferably 0.1 and 5 php, in case of water; and between about 0.1 and 50 php, preferably 0.1 to 20 php in case of halogenated hydrocarbons, aliphatic alkanes and alicyclic alkanes.

Additionally, other components may also be present during the polyurethane preparation process of the present invention, such as one or more polyurethane catalysts, surfactants and/or cross-linking agents. Polyurethane catalysts are known in the art and include many different compounds. For the purpose of the present invention, suitable catalysts include tin-, lead-or titanium-based catalysts, preferably tin-based catalysts, such as tin salts and dialkyl tin salts of carboxylic acids. Specific examples are stannous octoate, stannous oleate, dibutyltin dilaureate, dibutyltin acetate and dibutyltin diacetate. Other suitable catalysts are tertiary amines, such as, for instance, bis (2,2'-dimethylamino) ethyl ether, trimethylamine, triethylamine, triethylenediamine and dimethylethanolamine (DMEA). Examples of commercially available tertiary amine catalysts are those sold under the tradenames NIAX, TEGOAMIN and DABCO (all trademarks). The catalyst is typically used in an amount of from 0.01 to 2.0 parts by weight per hundred parts by weight of polyether polyol (php). Preferred amounts of catalyst are from 0.05 to 1.0 php.

The use of foam stabilisers (surfactants) is well known. Organosilicone surfactants are most conventionally applied as foam stabilisers in polyurethane production. A large variety of such organosilicone surfactants is commercially available. Usually, such foam stabiliser is used in an amount of from 0.01 to 5.0 parts by weight per hundred parts by weight of polyether polyol (php). Preferred amounts of stabiliser are from 0.25 to 1.0 php.

The use of cross-linking agents in the production of polyurethane foams is also well known. Polyfunctional glycol amines are known to be useful for this purpose. The polyfunctional glycol amine which is most frequently used and is also useful in the preparation of the present flexible polyurethane foams, is diethanol amine, often abbreviated as DEOA. If used at all, the cross-linking agent is applied in amounts up to 3.0 parts by weight per hundred parts by weight of polyether polyol (php), but amounts in the range of from 0.1 to 1.5 php are most suitably applied.

In addition, other well-known auxiliaries, such as fillers and flame retardants may also be used during the polyurethane preparation process.

Suitably, flame retardant may be present in a "flame retardant effective amount", i.e. an amount of total flame retardant sufficient to impart flame resistance to the polyurethane foam sufficient to pass a flame resistance standard, e.g. BS 5852, Part 2, Crib 5 or Cal 117 Section A - Part 1.

A supplemental halogenated phosphate flame retardant is commercially available, for example, tris-mono-chloropropyl-phosphate (TMCP) under the name Antiblaze®.

The invention may provide foams with improved compression set properties. In an embodiment, the foam has a dry and/or wet compression set value of at most 10, preferably at most 8, more preferably at most 6.

The compression set of the foam may be reduced relative to an identical foam made under identical conditions with an otherwise identical polyether polyol, but where the polyether polyol of does not comprise the aldehyde content.

In an embodiment, the compression set of the foam is reduced by at least 5%, preferably at least 7%, more preferably at least 10%, or even at least 20%.

Suitably, the compression set may involve a compression to less than 90% by volume, preferably less than 80% by volume. In an embodiment, the compression set is measured at 75% compression (CS75).

Throughout the description and claims of this specification, the words "comprise" and "contain" and variations of the words, for example "comprising" and "comprises", mean "including but not limited to", and do not exclude other moieties, additives, components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Other features of the invention will become apparent from the following examples. Generally speaking the invention extends to any novel one, or any novel combination, of the features disclosed in this specification (including any accompanying claims and drawings). Thus features, integers, characteristics, compounds, chemical moieties or groups described in conjunction with a particular aspect, embodiment or example of the invention are to be understood to be applicable to any other aspect, embodiment or example described herein unless incompatible therewith. Moreover unless stated otherwise, any feature disclosed herein may be replaced by an alternative feature serving the same or a similar purpose.

Where upper and lower limits are quoted for a property then a range of values defined by a combination of any of the upper limits with any of the lower limits may also be implied.

In this specification, references to properties are

- unless stated otherwise - to properties measured under ambient conditions, i.e. at atmospheric pressure and at a temperature of about 20°C.

The present invention will now be further described with reference to non-limiting examples, in which the following measurement techniques are employed.

Measurement Techniques

The following measurement techniques are used to determine relevant parameters throughout this specification unless otherwise specified.

*(i) Aldehyde content of a polyether polyol or foam*

The polyether polyol (2.0 g) is placed into a headspace vial and 85% ortho-phosphoric acid (20 $\mu$L) is added. The vial is sealed immediately by means of an aluminium cap with a PTFE-lined septum. The headspace vial is shaken using a mixer or the ultrasonic bath, until a homogeneous and clear test solution is obtained.

After reaching its vapour-liquid equilibrium, the headspace in the vial is analysed by capillary gas chromatography with flame ionisation detection (see Table 1 for conditions). The resultant volatile component concentrations are identified and quantified with external standardisation using substantially similar headspace conditions. In this manner overall aldehyde content/concentration can be determined.

The latent aldehyde content can be determined by subtracting any concentration of free aldehyde in the polyol (which may be measured separately by the same chromatography technique) from the overall aldehyde content determined. Alternatively, the latent aldehyde content can be determined by stripping free aldehyde from the polyol before measuring overall aldehyde content, which will then be equivalent to latent aldehyde content.

The same method can be applied to polyurethane foam, e.g. foam obtained from the process of the invention.

Table 1

| Column: | |
|---|---|
| Type | WCOT Fused Silica |
| Stationary Phase | CP-WAX-52 CB |
| Length x I.D. x O.D. | 25 m x 0.32 mm x 0.45 mm |
| Film Thickness | 1.20 $\mu$m |
| Detector System: | |
| Type | FID |
| Detector Sensitivity | The ratio of the signal to the noise level must be at least 2:1 at a concentration of 0.002 mmol/kg (0.1 mg/kg) of aldehyde in polyether polyol |
| Temperatures: | |
| Column Oven | 40 to 250°C programmed as follows: initial Temperature: 40°C for 5 min 40 to 250°C at 14°C/min, hold 10 min |
| Injection Port | 275°C |
| Detector | 300°C |
| Carrier Gas | Helium, 1.2 mL/min |
| Calibration | External Standard Technique "Calibration Curve Method" |
| Test Portion: | Injection Time 0.08 min (needle) or 1 mL (sample loop) |
| Headspace Autosampler: | |
| Sample Equilibrium Time | 25 min (Turbomatrix) or 15 min (HP 7694) |
| Sample Temp. | 100°C (Turbomatrix) or 120°C (HP 7694) |
| Transfer Line Temp. | 180°C |
| Needle Temp. | 180°C |

*(ii) Wet and dry compression set of a foam*

Specimens (50 mm $\times$ 50 mm $\times$ 25 mm) are cut and conditioned at 23$\pm$ 2 degrees for at least 12 hours. Initial thickness of the specimens is measured and they are placed on a lower plate with sufficient space that when compressed they do not touch. Incompressible spacers (being 75% of the height of the specimen being tested) are placed on the lower plate. A top plate is placed over the specimens without disturbing the arrangement of the specimens. The plates are uniformly tightened by tightening securing screws, thereby compressing the specimens. The incompressible spacers prevent the specimens being compressed beyond 75% of their initial height. That is, the compression set is being measured at 75% compression (CS75).

To measure dry compression set values, the compressed plates are kept inside a hot air oven which is maintained at the temperature of 70° C.

To measure wet compression set values, the compressed plates are placed inside a humidity chamber which is maintained at 40°C and relative humidity of 95%.

The specimens are subjected to the test conditions for 22 hours. The specimens are removed from the plates, allowed to recover for 30 minutes, and the thickness of the specimens is measured after these 30 minutes of recovery time.

Compression set (CS) property with respect to initial thickness is measured as follows:

$$CS \text{ value} = \frac{T_o - T_f}{T_o} \times 100$$

Where $T_o$ = initial thickness of test specimen, $T_f$ = final thickness of test specimen. The mean value of three results is recoded.

If the polyurethane foam does not recover/relax from the 75% compression, over the test time period, it will have a CS value of 25 (i.e. 100-75/100 $\times$ 100). Therefore, a lower CS value than 25 indicates that the polyurethane foam has partially recovered from the compression. Accordingly, the lower the CS value the greater the recovery of the polyurethane foam from the compression in the test time frame. A low CS value is generally desirable, as it is desirable for a polyurethane foam to relax as much as possible from a compression use between each compression uses.

*(iii) Other measurement techniques*

Other measurement techniques employed herein, unless otherwise specified, are those standard in the art.

Example 1 - Preparation of Polyether Polyols

Three stock polyether polyols (Polyol 1 to Polyol 3; see Table 3) were each prepared as follows:
A mixture of intermediate diol (124.1 g; starter glycol, PO based, molecular weight 400), intermediate triol (771.2 g; starter glycerine, PO based, molecular weight 670) and catalyst (100 mg; DMC catalyst ARCOL catalyst 3 ex Bayer Materials Science) were heated to 130°C in a 5 litre reaction vessel and the PO source (92 g; see Table 2) was added.

Table 2

|  | **PO 1** | **PO 2** | **PO 3** |
|---|---|---|---|
| PO designation | Pure PO | Dry crude PO | Wet crude PO |
| Free PA, ppm (headspace GC) | 10-20 | 500-700 | 800-2000 |
| Free AA, ppm (headspace GC) | 10-15 | 10-50 | 400-2000 |
| Water, ppm ASTM E1064 | 30-50 | 30-50 | 1000-2000 |

When the catalyst was activated (expressed by a pressure drop) a mixture of EO source (280 g; ex Shell, free aldehyde 30 ppm) and the PO source (2735 g; see Table 2) was then added over 3 hrs. The reaction was stirred for 30 minutes at 130°C and then stripped for 15 minutes at about 100 mbar. The reaction mixture was then allowed to cool to 95°C and the reaction mixture was stripped again by vacuum (about 20 mbar) for 2 hrs at 130°C and 100 mBar, followed by a nitrogen gas purge for 20 min. The free aldehyde content consisting of PA and AA aldehyde content in the resultant polyether polyols was measured, as was the colour (ASTM D 1209), OH value and viscosity. Thereafter, the polyols were stripped to reduce free aldehyde levels to below 0.2 ppm and latent aldehyde contents were measured. The properties are given in Table 3:

Table 3

|  | Polyol 1 | Polyol 2 | Polyol 3 |
|---|---|---|---|
| PO source | PO 1 | PO 2 | PO 3 |
| OH-value (mg KOH/g/ (ASTM D 4274) | 55.7 | 56.0 | 55.7 |
| Viscosity mm$^2$/s (ASTM D445) | 230 | 218 | 221 |
| Colour (ASTM D 1209) | 24 | 20 | 23 |
| Free PA content before stripping (ppm) | 15 | 600 | Not measured |
| Latent PA content (ppm) | 15 | 160 | Not measured |
| Free AA content before stripping (ppm) | 12 | 20 | Not measured |
| Latent AA content (ppm) | 8 | 10 | Not measured |

Example 2

PU foams were prepared using Polyol 1 (to give Comparative PU 1 to Comparative PU 5), Polyol 2 (to give PU 1, PU 2 and PU 3), Polyol 3 (to give PU 4 and PU 5), using the following general method, with the individual chemical conditions, physical conditions and resultant properties being given in Table 4 to Table 8 below:
The polyether polyol (i.e. one of Polyol 1 to Polyol 3) was placed in a first plastic beaker. The blowing agent (water and/or methylene chloride), amine catalyst (Niax A33) and silicone (Niax L-580) were then added. The content of the first beaker is premixed for 30 seconds at 1700-1800 rpm.

Tin catalyst (Niax D-19; 10% w/w conc. in polyether polyol) in a syringe is then injected into the premix, and mixing is continued for 10 seconds. Toluene diisocyanante (TDI) is then added to the mixture from a second beaker, and the mixing continued for a further 5 seconds. Stirring is then stopped and the mixture is poured into a paper box. Cream time is recorded when the transparent liquid starts to turn milky. Subsequently, foam full rise time, blow off time and gel time are recorded.

The dry and wet compression set properties of the foams were determined, as were tensile strength and elongation. Results are also shown in Table 4 to Table 8 below.

Table 4

|  | Comparative PU 1 | PU 1 |
|---|---|---|
| **Chemical conditions** |  |  |
| Stock polyether polyol (parts by weight) pbw | Polyol 1 100 | Polyol 2 100 |
| TDI Index | 107 | 107 |
| Blowing agent (methylene chloride) (parts per 100 parts of polyol) php | 10 | 10 |
| Amine catalyst (Niax A33) php | 0.12 | 0.12 |
| Tin catalyst (Niax D-19) php | 0.25 | 0.25 |
| Surfactant (Niax L-580) php | 1.4 | 1.4 |
| **Physical conditions** |  |  |
| Box type | 9 litre | 9 litre |
| Cream time (s) | 23 | 22 |
| Full rise time (s) | 129 | 126 |
| **Physical Properties** |  |  |
| Density (kg/m$^3$) | 15.7 | 15.8 |
| Porosity (l/min) ASTM D 3574 | 79 | 98 |
| Compression load deflection 40% (kPa) ISO 3386 | 2.1 | 2 |
| Tensile strength (kPa) ASTM D 3574 | 61 | 57 |

(continued)

| Physical Properties | | |
|---|---|---|
| Elongation(%) ASTM D 3574 | 174 | 171 |
| Dry compression set 75% (%) | 5.3 | 4.6 |
| Wet compression set 75% (%) | 7.5 | 6.8 |

Table 5

| | Comparative PU 2 | PU 2 |
|---|---|---|
| **Chemical conditions** | | |
| Stock polyether polyol pbw | Polyol 1 100 | Polyol 2 100 |
| TDI Index | 107 | 107 |
| Blowing agent (water) php | 4.8 | 4.8 |
| Amine catalyst (Niax A33) php | 0.12 | 0.12 |
| Tin catalyst (Niax D-19 php) | 0.2 | 0.2 |
| Surfactant (Niax L-580)php | 1.2 | 1.2 |
| **Physical conditions** | | |
| Box type | 9 litre | 9 litre |
| Cream time (s) | 21 | 20 |
| Full rise time (s) | 105 | 103 |
| **Physical Properties** | | |
| Density (kg/m$^3$) | 20 | 20.5 |
| Porosity (l/min) ASTM D 3574 | 27 | 46 |
| Compression load deflection 40% (kPa) ISO 3386 | 3.3 | 3.1 |
| Tensile strength (kPa) ASTM D 3574 | 81 | 81 |
| Elongation(%) ASTM D 3574 | 188 | 193 |
| Dry compression set 75% (%) | 11.6 | 5.8 |
| Wet compression set 75% (%) | 10.8 | 8.3 |

Table 6

| | Comparative PU 3 | PU 3 |
|---|---|---|
| **Chemical conditions** | | |
| Stock polyether polyol pbw | Polyol 1 100 | Polyol 2 100 |
| TDI Index | 107 | 107 |
| Blowing agent (water)php | 4.5 | 4.5 |
| Amine catalyst (Niax A33)php | 0.12 | 0.12 |
| Tin catalyst (Niax D-19)php | 0.18 | 0.18 |
| Surfactant (Niax L-580)php | 1.2 | 1.2 |
| **Physical conditions** | | |
| Box type | 60 litre | 60 litre |

(continued)

| Physical conditions | | |
|---|---|---|
| Cream time (s) | n.m. | n.m. |
| Full rise time (s) | 182 | 173 |
| **Physical Properties** | | |
| Density (kg/m$^3$) | 19 | 19 |
| Porosity (l/min) ASTM D 3574 | 23 | 27 |
| Compression load deflection 40% (kPa) ISO 3386 | 3.8 | 3.5 |
| Tensile strength (kPa) ASTM D 3574 | 84 | 82 |
| Elongation(%) ASTM D 3574 | 141 | 140 |
| Dry compression set 75% (%) | 3.5 | 2.8 |
| Wet compression set 75% (%) | 5.1 | 4.7 |

Table 7

| | Comparative PU 4 | PU 4 |
|---|---|---|
| **Chemical conditions** | | |
| Stock polyether polyol pbw | Polyol 1 100 | Polyol 3 100 |
| TDI Index | 107 | 107 |
| Blowing agent (water)php | 4.8 | 4.8 |
| Amine catalyst (Niax A33) php | 0.12 | 0.12 |
| Tin catalyst (Niax D-19) | 0.24 | 0.24 |
| Surfactant (Niax L-580) | 1.2 | 1.2 |
| **Physical conditions** | | |
| Box type | 9 litre | 9 litre |
| Cream time (s) | 20 | 20 |
| Full rise time (s) | 94 | 94 |
| **Physical Properties** | | |
| Density (kg/m$^3$) | 19.7 | 19.7 |
| Porosity (l/min) ASTM D 3574 | 39 | 57 |
| Compression load deflection 40% (kPa) ISO 3386 | 3.3 | 3.4 |
| Tensile strength (kPa) ASTM D 3574 | 96 | 96 |
| Elongation(%) ASTM D 3574 | 159 | 162 |
| Dry compression set 75% (%) | 4.6 | 3.9 |
| Wet compression set 75% (%) | n.m. | n.m. |

Table 8

| | Comparative PU 5 | PU 5 |
|---|---|---|
| **Chemical conditions** | | |
| Stock polyether polyol pbw | Polyol 1 100 | Polyol 3 100 |

(continued)

|  | Comparative PU 5 | PU 5 |
|---|---|---|
| **Chemical conditions** | | |
| TDI Index | 107 | 107 |
| Blowing agent (water) | 4.8 | 4.8 |
| Amine catalyst (Niax A33) | 0.13 | 0.13 |
| Tin catalyst (Niax D-19) | 0.19 | 0.19 |
| Surfactant (Niax L-580) | 1.2 | 1.2 |
| **Physical conditions** | | |
| Box type | 60 litre | 60 litre |
| Cream time (s) | n.m. | n.m. |
| Full rise time (s) | 122 | 130 |
| **Physical Properties** | | |
| Density (kg/m$^3$) | 19 | 19 |
| Porosity (l/min) ASTM D 3574 | 104 | 78 |
| Compression load deflection 40% (kPa) ISO 3386 | 3 | 3 |
| Tensile strength (kPa) ASTM D 3574 | 97 | 97 |
| Elongation(%) ASTM D 3574 | 169 | 159 |
| Dry compression set 75% (%) | 5.6 | 4.9 |
| Wet compression set 75% (%) | 9 | 7.8 |

A relative comparison of wet and dry compression set (CS) values of PU 1 to PU 5 to the corresponsing Comparative PU 1 to Comparative PU 5 is given in Table 9. Specifically, the reported CS values are 75% CS values (CS75). The values in Table 9 give the relative lowering (reduction) of the wet and dry CS values of the inventive examples compared to the corresponding reference examples, to give a measure of the improved recovery/relaxation of the inventive examples over the comparative examples under the compression set tests.

For example, PU 1 and Comparative PU 1 have dry compression sets of 4.6 and 5.3 respectively. Therefore, PU 1 has recovered more from the compression than has Comparative PU 1 under the test conditions. Therefore, as a relative comparison, the dry compression set of PU 1 is 13% lower compared to Comparative PU 1, and so PU 1 has relaxed/recovered 13% more than Comparative PU 1 under the test conditions.

Table 9

|  | Relative lowering of Dry Compression Set (%) | Relative lowering of Wet Compression Set (%) |
|---|---|---|
| **PU 1** vs **Comparative PU 1** | 13.2 | 9.3 |
| **PU 2** vs **Comparative PU 2** | 50.0 | 23.1 |
| **PU 3** vs **Comparative PU 3** | 20.0 | 7.8 |
| **PU 4** vs **Comparative PU 4** | 15.2 | n.m. |
| **PU 5** vs **Comparative PU 5** | 12.5 | 13.3 |

Table 9 shows that each of PU 1 to PU 5 have low dry compression sets, and which are lower than the dry compression sets of the corresponding control examples (i.e. Comparative PU 1 to Comparative PU 5) i.e. in the range 13 to 50%.

Table 9 also shows that each of PU 1 to PU 5 have low wet compression sets, and which are lower than the wet compression sets of the corresponding control examples (i.e. Comparative PU 1 to Comparative PU 5) i.e. in the range 8 to 23%.

Generally, each of PU 1 to PU 5 have a lower compression set under the dry test conditions than under the wet test conditions.

Accordingly, PU 1 to PU 5, prepared in accordance with the invention (i.e. prepared using Polyol 2 or Polyol 3, i.e. comprising aldehyde content), exhibit advantageously lower wet and dry compression set properties (improved recovery/relaxation of the polyurethane foam from wet and/or dry compression), when compared to Comparative PU 1 to Comparative PU 5 (i.e. prepared using control Polyol 1, which is substantially free of aldehyde content, i.e. contains less than 25 ppm of aldehyde content). The invention therefore allows access to polyurethane foams with improved recovery/relaxation properties from compression as desired by the end user.

## Claims

1. Use of a polyether polyol comprising a latent aldehyde content of at least 50 ppm, and/or a polyether polyol obtainable from ring opening polymerization of alkylene oxide comprising a free aldehyde content of at least 200 ppm, in the preparation of a flexible polyurethane foam for the purpose of affecting a compression set of the resulting foam.

2. Use according to claim 1 wherein affecting the compression set of the resulting foam comprises reducing the compression set relative to an identical foam made under identical conditions with an identical polyether polyol, save that the polyether polyol of does not comprise the aldehyde content.

## Patentansprüche

1. Verwendung eines Polyetherpolyols, das einen Gehalt an latentem Aldehyd von mindestens 50 ppm aufweist, und/oder eines Polyetherpolyols, das durch Ringöffnungspolymerisation von Alkylenoxid mit einem Gehalt an freiem Aldehyd von mindestens 200 ppm gewonnen werden kann, bei der Herstellung eines flexiblen Polyurethanschaumstoffs zur Beeinflussung des Druckverformungsrestes des entstandenen Schaumstoffs.

2. Verwendung nach Anspruch 1, wobei das Beeinflussen des Druckverformungsrestes des entstandenen Schaumstoffs das Reduzieren des Druckverformungsrestes relativ zu einem identischen Schaumstoff umfasst, der unter identischen Bedingungen mit einem identischen Polyetherpolyol hergestellt wurde, mit der Ausnahme, dass das Polyetherpolyol nicht den Aldehydgehalt aufweist.

## Revendications

1. Utilisation d'un polyol de polyéther comprenant une teneur latente en aldéhyde d'au moins 50 ppm, et/ou d'un polyol de polyéther pouvant être obtenu par polymérisation par ouverture de cycle d'oxyde d'alkylène comprenant une teneur en aldéhyde libre d'au moins 200 ppm, dans la préparation d'une mousse de polyuréthane flexible dans le but d'affecter une déformation rémanente après compression de la mousse ainsi élaborée.

2. Utilisation selon la revendication 1, dans laquelle l'affectation de la déformation rémanente après compression de la mousse ainsi élaborée comprend la réduction de la déformation rémanente après compression par rapport à une mousse identique fabriquée dans des conditions identiques avec un polyol de polyéther identique, sauf que le polyol de polyéther de celle-ci ne comprend pas la teneur en aldéhyde.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10143195 A
- EP 0755716 A
- US 3578568 A
- WO 02070497 A
- US 4692535 A